# EUROPEAN PATENT APPLICATION

(11) **EP 1 150 536 A2**
(43) Date of publication of application: **31.10.2001**
(21) Application number: 01400997.1
(22) Date of filing: 19.04.2001
(51) Int. Cl.: H04Q 11/04

(54) **Method and apparatus for providing client layer cross-connect functionality in a cross-connect or ADM**

(30) Priority: 28.04.2000 IT MI000930
(71) Applicant: ALCATEL, 75008 Paris (FR)
(72) Inventor: Lometti, Alberto, 23807 Merate (Lecco) (IT); Schweizer, Livia, 20135 Milano (IT)
(74) Representative: Colombo, Stefano Paolo

(57) **Abstract**

An apparatus and method is described for the integrated management of Client Layer Cross-Connect functionality in an Add-Drop Multiplexer or in a Cross-Connect. The present invention provides for replacing at least one of the I/O ports present in the current apparatuses by a board having a matrix with Client Layer Cross-Connect functionality, such functionality comprising the Server Layer termination and all the functionalities connected to the Client Layer, in addition to the Client Cross-Connect functionality. The apparatus of the invention fully complies with the related ITU and ETSI Recommendations since the access to the ATM matrix is performed through SDH/SONET or PDH standard interfaces. The apparatus is easily upgradable in field.

## Description

The present invention relates to a method and apparatus for managing, in an integrated manner, the Client Signal (or Client Layer) Cross-Connect functionality in an ADM (Add Drop Multiplexer) or XC (Cross-Connect) apparatus, in particular in ADM SDH/SONET or XC SDH/SONET equipments.

As it is known to those working in the telecommunications field, several types of traffic nowadays exist, namely voice traffic, data traffic or a combination thereof. In this connection, many believe that the data traffic (mainly because of rapid growing of Internet) will increase in the future more markedly that the voice traffic that in the next years will be a minority. In view of this new scenario, the apparatus and the methods used nowadays to perform cross-connect functionalities are deemed unsuitable to support these functionalities in an efficient manner.

The main problem is thus concerned with the management of Cross-Connect functionalities of the Client Layer, for example for data, in an SDH/SONET system of an ADM or XC type. In order to make the following description clear, by "Server Layer" is meant the SDH/SONET layer that carries ATM (or IP) traffic (that in this event turns out to be the "Client").

The present SDH/SONET equipments performing the Cross-Connect functionality at SDH/SONET level, typically ADMs and Cross-Connects, comprise a central matrix and a plurality of input and output ports. The known equipments performing the Cross-Connect functionality both at SDH/SONET level and ATM (IP) level are indeed composed of two different apparatus: one for the SDH/SONET level and one for the ATM (IP) level. Naturally, this solution is rather expensive, bulky and the in-field upgrading of the apparatus itself is difficult.

Another known solution is based upon a centralized ATM (IP) to SDH/SONET conversion functionality which is performed at the Input/Output (I/O) ports. Such a solution has the disadvantage and the limitation that it does not allow the management of mixed SDH/ATM (IP) traffic but only of pure ATM (IP) traffic and furthermore it does not allow the in-field upgrading of the existing SDH/SONET systems.

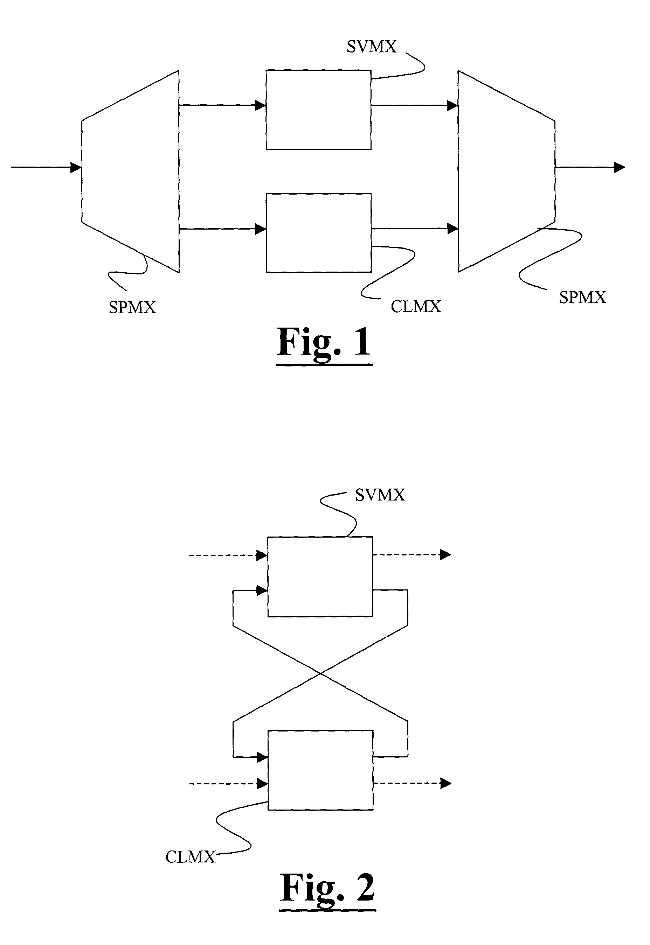

Lastly, still another known solution to obtain both the SDH/SONET and the ATM (IP) cross-connects is based upon a centralized SDH/ATM Cross-Connect functionality with an "in parallel" approach as shown in Fig. 1. In other words, the signal (no matter what type it may be) is at first passed through a space matrix (SPMX), duplicated and then passed to two matrices, one (SVMX) for the traffic at SDH level and the other (CLMX) for the traffic at Client level. Finally, the traffic is passed through another matrix (SPMX) similar to the input one. Clearly this approach does not allow the exploitation of the grooming at SDH/SONET matrix level and, from an implementation point of view, leads to solutions which hardly allow the in-field upgrading of the existing SDH/SONET equipments, since they allow the ATM (IP) functionalities in units (boards) which are already complex because of the pre-existing SDH/SONET connection functionalities.

In view of the known solutions, that are not quite efficient, it is the main object of the present invention to provide a method and apparatus for managing, in an integrated manner, the Client signal (or Client layer) Cross-Connect functionality in an ADM (or XC) SDH (or SONET) system.

A further object of the present invention is to provide a method and apparatus for managing said Cross-Connect functionality at Client Layer (e.g. for data) in an efficient manner, easily in-field upgradable and rather inexpensive.

A further object of the present invention is to provide an apparatus for managing said cross-connect functionality which substantially is not bulkier than the devices at present in use.

These and further objects are achieved by means of an apparatus and method having the characteristics set forth in the respective claims 1 and 5. Further advantageous characteristics of the invention are set forth in the respective dependent claims. All of the claims should be considered as an integral part of the present description.

The basic idea of the present invention is to place an SDH or SONET matrix in series with an ATM (or IP) matrix at the I/O ports of the SDH/SONET system.

The invention will become fully clear from the following detailed description, given by way of a mere exemplifying and non limiting example, to be read with reference to the attached drawing figures, wherein:
- Fig. 1 shows an apparatus for managing, in an integrated manner, the cross-connect functionality in an ADM SDH or SDXC system with "in parallel" configuration according to the prior art;
- Fig. 2 very schematically illustrates the "in series" configuration of the apparatus in accordance with the present invention;
- Fig. 3 schematically shows a first embodiment according to the present invention;
- Fig. 4 schematically shows a second embodiment according to the present invention; and
- Fig. 5 shows the apparatus of Fig. 4 in greater detail.

As it is known, in SDH (Synchronous Digital Hierarchy) transmissions, it is necessary to utilize devices that implement the Cross-Connect functionality, hence typically Cross-Connects and ADMs. A Cross-Connect (SDXC) or an ADM can be defined as apparatus implementing a connection and a transparent and controlled reconnection of Virtual Containers (VCs) which are constructed according to what defined in the ITU-T Recommendation G.707 between its interface ports. These interface ports can be at high SDH level or at PDH level, as defined in ITU-T Recommendations G.707 and G.702, respectively. In addition, the Cross-Connects and the ADMs can support the control and management functionalities, as defined in the ITU-T Recommendation G. 784. Therefore, it can be said that an apparatus that implements the Cross-Connect functionality (SDH ADM or SDXC) comprises a support structure (sub-frame with board slots), not shown, which support structure houses: a) one or more boards on which a cross-connect matrix is located and b) a plurality of Input/Output (I/O) ports. The ports are substantially logic units that can be implemented as a single board or multi boards.

The present invention provides for replacing at least one of the I/O ports present in the existing equipments with a board mounting a Client Layer Cross-Connect functionality matrix; such functionality comprising the termination of the Server (i.e. SDH/SONET) Layer and all the Client-related functionalities, in addition to the Client Cross-Connect functionality matrix; such functionality comprising the termination of the server (i.e. SDH/SONET) layer and all the Client-related functionalities, in addition to the Client Cross-Connect functionality.

This "in series" arrangement (see Fig. 2) allows for the achievement of an easy in-field upgrading of the existing SDH/SONET equipments, simply by inserting the unit according to the present invention into an already available (or possibly made available) slot of the apparatus (or by replacing at least one I/O port board).

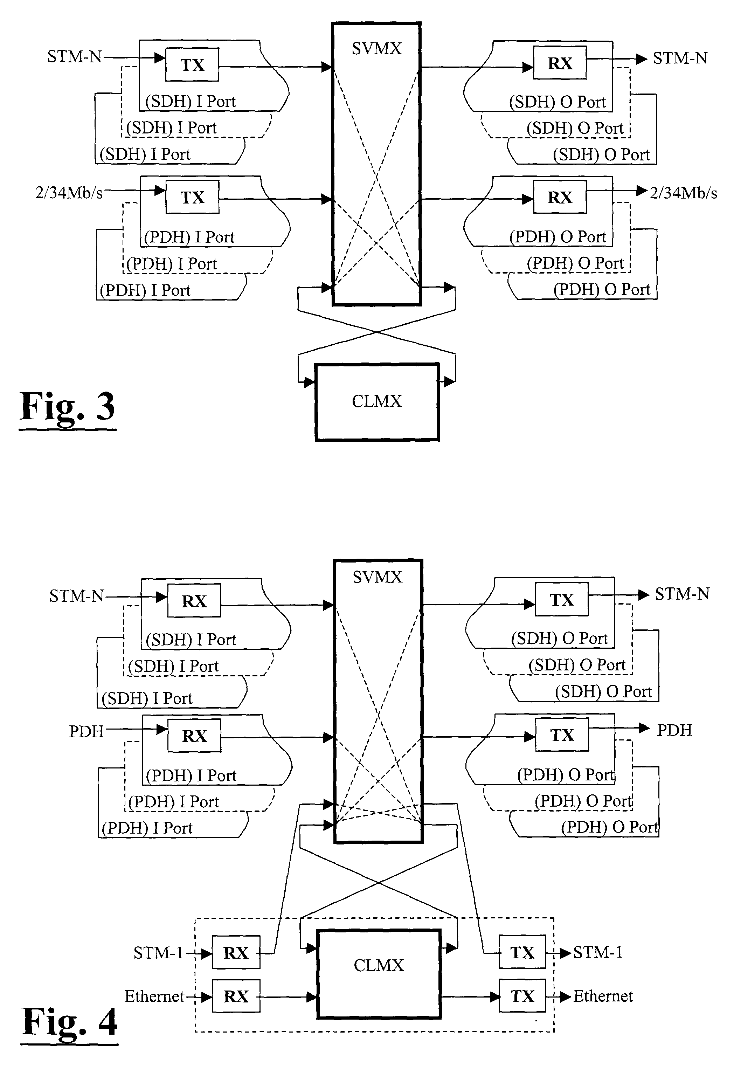

In an embodiment of the present invention, schematically depicted in Fig. 3, it is possible to utilize standard I/O ports (SDH/SONET or PDH) for the access to the sub-matrix. Such contrivance on the one hand is the normal behavior of the SDH or PDH standard I/O ports, on the other hand, it is necessary for the Client signal to pass through the SDH/SONET matrix (SVMX). This configuration can be defined as an indirect access configuration.

A further embodiment, termed direct access configuration, is shown in Fig. 4. This embodiment provides for implementing dedicated (to the Client Layer) I/O ports directly within the Client sub-matrix unit in order to increase the Input/Output capability. Physical interfaces not supported by standard I/O port units could be also implemented. In this embodiment, the ATM (IP) traffic is mapped only into SDH VC4s; the signal is handled exactly as it were handled by a standard SDH port.

The path of the signals entering through the various ports of the device of Fig. 3 will be described below in greater detail by way of example. Synchronous Transport Modules-N (STM-N) enter through the ports dedicated thereto (SDH ports or possibly SONET ports), are processed by the SDH or SONET main matrix (SVMX) able to manage both high order (3, 4) and low order (1, 2, 3) Virtual Containers (VCs) and they are input to the ATM (IP) matrix (CLMX). The ATM (IP) matrix, in turn, suitably processes the received VCs and sends them again to the SDH/SONET main matrix (SVMX) from where they go out through the SDH/SONET or PDH ports. The same applies to PDH (2 or 34 Mb/s) signals entering the SDH/SONET main matrix (SVMX) through the respective ports ((PDH)I Ports), pass through the SDH/SONET main matrix (SVMX) and go out through the SDH/PDH or PDH ports ((SDH)O Port, (PDH)O Port). Notice that, in order to manage PDH data interfaces, dummy SDH/SONET Virtual Containers, normally not managed as normal containers, should be created to carry PDH data signals to the IP/ATM switch/router through the SDH/SONET matrix (SVMX).

As mentioned above, it is possible to provide for input and output ports dedicated to STM-1 (VC-4) signals, 34 Mbit/s PDH signals or other physical interfaces (for instance Ethernet) (see Fig. 4). In this latter case (Ethernet interfaces) these signals would not be forced to pass through the SDH/SONET main matrix (SVMX) but they should be only processed by the ATM matrix. Just for this reason, such a solution is called a "direct access" configuration.

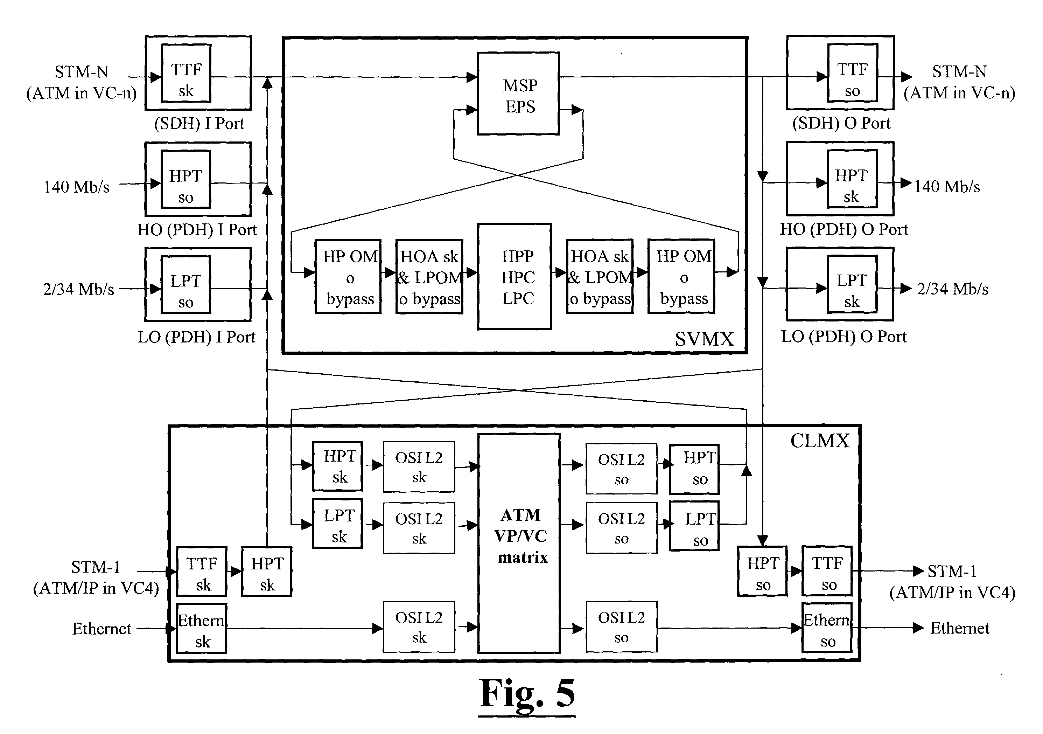

Finally, Fig. 5 shows the direct access embodiment and the paths of the various signals in greater detail. SDH ports are provided for ATM (IP) signals in level n Virtual Containers (ATM (IP) in VC-n), PDH ports are provided for 140 Mb/s high-order signals and furthermore PDH ports are provided for 2 (or 34) Mb/s low-order signals. Ports which are integrated on the ATM(IP) unit for STM-1 signals and dedicated ports for Ethernet signals are however provided too. The meaning of the various blocks crossed by the signals can be understood from the list of acronyms given below. For the missing ones, reference should be made to the relevant Recommendations.
- TTF:: Transport Terminal Function
- HPT:: Higher Path Termination
- MSP:: Multiplex Section Protection
- EPS:: Equipment Protection Switching
- LPT:: Lower Path Termination
- HPOM:: Higher Path Overhead Monitoring
- LPOM:: Lower Path Overhead Monitoring
- HOA:: Higher Order Assembler
- HPP:: Higher Path Protection
- LPP:: Lower Path Protection
- HPC:: Higher Path Connection
- LPC:: Lower Path Connection
- VCs:: Virtual Containers
- VPs:: Virtual Paths
- OSI L2:: Open System Intercommunication_Layer 2
- sk:: sink
- so:: source

Among the advantageous characteristics of the present invention there is the full compliance with the relevant ITU and ETSI Recommendations. In fact, the access to the ATM matrix is performed through SDH/SONET or PDH standard interfaces (typically STM-N interfaces, 34 Mb/s and possibly 2 Mb/s interfaces). In case of PDH interfaces, some SDH/SONET VCs (possibly not managed as such) are created inside the equipment in order to transport, in a transparent manner, the PDH stream from the input port to the ATM matrix. All the SDH/SONET characteristics (for instance the network protection mechanisms) on the ATM transporting streams are provided by the non-ATM portion of the equipment as occurs in an only-SDH/SONET system.

Although the present invention has been described in greater detail with reference to SDH synchronous signals for clearness and length-of-description reasons, it is apparent that it can be used with SONET signals as well. Therefore, unless expressly specified, for the purposes of the present description, by "SDH signals" is meant indifferently SDH signals and SONET signals and any other reference to SDH should be intended as including SONET.

There have thus been shown and described a novel method and a novel apparatus which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

## Claims

1. Switching apparatus (XC, ADM) for implementing a transparent and controlled Cross-Connect functionality of Virtual Containers (VCs) in a telecommunications network, said apparatus (XC, ADM) comprising:
a sub-frame provided with board housings;
at least one board comprising at least one Server Layer Cross-Connect matrix (SVMX), said at least one Server Layer Cross-Connect Matrix board (SVMX) being housed in at least one of said board housings;
at least one board comprising Input/Output ports (I/O Ports), said at least one board comprising Input/Output ports (I/O Ports) being housed in at least one of said board housings,
and being **characterized by** further comprising:
at least one corresponding board (CLMX) comprising a Cross Connect sub-matrix with Client Layer functionality, said Client Layer Cross-Connect sub-matrix board (CLMX) being housed in at least one of said board housings and being connected to the Server Layer Cross-Connect matrix (SVMX) in an "in series" configuration, the Client Layer functionality comprising Server Layer termination functionalities.

2. Apparatus according to claim 1, **characterized in that** said board comprising a Client Layer Cross-Connect sub-matrix (CLMX) further comprises Input/Output ports (I/O Ports).

3. Apparatus according to claims 1 or 2, **characterized in that** said Input/Output ports (I/O Ports) comprise ports for plesiochronous signals (PDH Ports) and **in that** means are provided for creating SDH/SONET Virtual Containers to carry said plesiochronous signals (PDH) to the Client Layer Cross-Connect sub-matrix (CLMX) through said cross-connect matrix (SVMX).

4. Apparatus according to any of claims 1 to 3, **characterized in that** said Input/Output ports (I/O ports) comprise ports or interfaces for Ethernet signals, said Ethernet signal ports being directly connected to said Client Layer Cross-Connect sub-matrix (CLMX), thus avoiding passing through the Server Layer Cross-Connect matrix (SVMX).

5. Method of implementing a transparent and controlled cross-connect functionality of Virtual Containers (VCs) in a telecommunications network, said method comprising the step of providing an apparatus (XC, ADM) comprising:
a sub-frame provided with board housings;
at least one board comprising at least one Server Layer Cross-Connect matrix (SVMX), said at least one Server Layer Cross-Connect matrix board (SVMX) being housed in at least one of said board housings,
at least one board comprising Input/Output ports (I/O ports), said at least one board comprising Input/Output ports (I/O ports) being housed in at least one of said board housings,
and being **characterized by** the steps of:
providing for at least one corresponding board comprising a Client Layer Cross-Connect sub-matrix (CLMX);
housing said at least one Client Layer Cross-Connect sub-matrix board (CLMX) in at least one of said board housings; and
connecting the at least one Client Layer Cross-Connect sub-matrix to the Server Layer Cross-Connect matrix (SVMX) in an "in series" configuration, the Client Layer functionalities comprising Server Layer (SDH/SONET) termination functionalities.

6. Method according to claim 5, wherein said Input/Output ports (I/O ports) comprise ports or interfaces for plesiochronous signals (PDH Port), **characterized by** the step of:
creating SDH/SONET Virtual Containers to bring said plesiochronous signals (PDH) to the Client Layer Cross-Connect sub-matrix (CLMX) through said Cross-Connect matrix (SVMX).

7. Method according to claim 5 or 6 wherein said Input/Output ports (I/O Ports) comprise ports or interfaces for Ethernet signals, **characterized by** the step of:
connecting said Ethernet signal ports to said Client Layer Cross-Connect sub-matrix (LMX), thus avoiding passing through the Server Layer Cross-Connect matrix (SVMX).
